# EUROPÄISCHE PATENTANMELDUNG

(11) **EP 4 651 344 A1**
(43) Veröffentlichungstag der Anmeldung: **19.11.2025**
(21) Anmeldenummer: 25174361.3
(22) Anmeldetag: 06.05.2025
(51) Int. Cl.: H02K 1/26, H02K 11/21, H02K 17/02, H02P 6/182, H02K 29/06

(54) **ROTOR SOWIE ELEKTRISCHE MASCHINE BZW. KRAFTFAHRZEUG MIT DERARTIGEM ROTOR UND VERFAHREN ZUR POSITIONSBESTIMMUNG EINES DERARTIGEN ROTORS**

(30) Priorität: 14.05.2024 DE 102024113367
(71) Anmelder: AUDI AG, 85057 Ingolstadt (DE)
(72) Erfinder: Heidler, Bastian, 85402 Kranzberg (DE); Lehner, Benjamin, 85051 Ingolstadt (DE)

(57) **Zusammenfassung**

Rotor (3) geeignet für eine elektrische Maschine eines Kraftfahrzeugs, der als ein bezüglich eines Stators rotierbar-gelagerter Läufer der elektrischen Maschine verwendbar ist. Dabei weist der Rotor (3) mehrere entlang der Umfangsrichtung (12) verteilt angeordnete und sich entlang der Längsrichtung (10) erstreckende Ausnehmungen (19) oder Öffnungen auf. Die jeweiligen Querschnitte der Ausnehmungen (19) unterscheiden sich untereinander entlang der Umfangsrichtung (12), um eine Rotorpositionsbestimmung zu ermöglichen. Außerdem sind alle Ausnehmungen (19) bezogen auf die Radialrichtung also der dem Stator zugewandten Seite hin geschlossen, um Luftwiderstandsverluste und -geräusche zu reduzieren.

## Beschreibung

Die vorliegende Erfindung betrifft einen Rotor für eine elektrische Maschine eines Kraftfahrzeugs, der als ein bezüglich eines Stators der elektrischen Maschine rotierbar gelagerter Läufer der elektrischen Maschine verwendbar ist, wobei der Rotor mehrere entlang einer Umfangsrichtung verteilt angeordnete und sich entlang einer Längsrichtung erstreckende Ausnehmungen aufweist, wobei sich die geometrischen Formen der Querschnitte der Ausnehmungen untereinander entlang der Umfangsrichtung unterscheiden. Überdies betrifft die vorliegende Erfindung eine elektrische Maschine, umfassend einen Stator und einen bezüglich des Stators rotierbar gelagerten Läufer. Ferner betrifft die vorliegende Erfindung ein Kraftfahrzeug. Schließlich betrifft die vorliegende Erfindung ein Verfahren zur Bestimmung einer Rotorlage eines Läufers einer elektrischen Maschine.

Elektrische Maschinen, die mitunter auch als Elektromotoren bezeichnet werden, umfassen einen Stator und einen Rotor, wobei hierzu auch oft die Begriffe Ständer und Läufer verwendet werden. Elektromagnetische Interaktionen zwischen Feldspulen und gegebenenfalls Permanentmagneten des Stators beziehungsweise des Rotors bewirken eine Umwandlung von elektrischer Energie in kinetische Energie und umgekehrt. Insbesondere bei Induktionsmaschinen, etwa fremderregten Asynchronmaschinen, wird auf die Verwendung von Permanentmagneten verzichtet. Stattdessen sind ausschließlich Feldspulen respektive Wicklungen und gegebenenfalls Kurzschlusskäfige vorgesehen. Für die Steuerung des Betriebs der elektrischen Maschine ist typischerweise die Kenntnis einer aktuellen Rotorlage des Rotors erforderlich, also eine momentane Drehstellung des Rotors bezüglich eines orts- oder statorfesten Bezugssystems, die als ein Winkel zwischen 0° und 360° beziehungsweise zwischen 0 und 2π angegeben sein kann. Oft wird hierfür ein seitens des Rotors angeordneter Sensor verwendet, was jedoch mit Nachteilen verbunden ist. So stellt ein solcher Rotorlagesensor zusätzliche Hardware dar, wodurch weitere Kosten sowie ein größeres Gesamtgewicht der elektrischen Maschine verursacht werden. Überdies ist im Rahmen der Inbetriebnahme eines Rotorlagesensors typischerweise ein sogenanntes "Anlernen" des Sensors erforderlich, was zusätzlichen Aufwand bewirkt. Ein weiterer Nachteil im Zuge der Verwendung eines Rotorlagesensors ist, dass in diesem Fall elektrische Signalleitungen erforderlich sind, die eine Signalübertragung von dem rotierenden Rotor zu einem diesbezüglich ortsfesten Abschnitt der elektrischen Maschine ermöglichen, wobei zu diesem Zweck verschleißanfällige Schnittstellen wie etwa Schleifringe erforderlich sind.

Aus dem Stand der Technik sind Konzepte zur Überwindung der im Fall der Verwendung des Rotorlagesensors entstehenden Nachteile bekannt. So ist etwa aus DE 10 2015 222 849 A1 ein Konzept bekannt, bei dem ein Rotor für eine Asynchronmaschine entlang eines Außenumfangs mehrere Nuten aufweist, wobei im Bereich einer Umfangsoberfläche des Rotors angeordnete Öffnungsquerschnitte der Nuten sich zueinander unterscheiden. Hierbei wird ein Rotorlagesensor hinfällig, da aufgrund dieser Unterschiede charakteristische Oberschwingungen in einem Leitungsstrom der Asynchronmaschine auftreten, deren Auswertung die Bestimmung der aktuellen Rotorlageposition des Rotors ermöglicht.

Ein weiteres Konzept, bei der gezielt eine Asymmetrie des Rotors bezüglich seiner Längs- respektive Rotationsachse eingebracht ist, ist aus der Offenlegungsschrift DE 101 50 355 A1 bekannt. Dieses Dokument offenbart einen Elektromaschinenantrieb mit einem Läufer und einem Ständer, wobei mehrere um den Läufer herum gleichmäßig beanstandete, aktive Läufernuten vorgesehen sind, deren Tiefe sich in einem wiederholenden Muster ändert. Die aktiven Läufernuten bewirken mithin eine Erzeugung einer Schenkeligkeit, sodass eine sensorlose Steuerung bei dem Elektromaschinenantrieb ermöglicht wird.

Die vorliegende Erfindung stellt sich die Aufgabe, ein verbessertes Konzept im Zusammenhang mit einer elektrischen Maschine anzugeben, bei der in den Rotor gezielt Strukturen zur Generierung einer Asymmetrie betreffend die magnetischen Eigenschaften des Rotors eingebracht sind, insbesondere hinsichtlich der Verbesserung des Wirkungsgrades der elektrischen Maschine.

Erfindungsgemäß gelöst wird die Aufgabe bei einem Rotor der eingangs genannten Art dadurch, dass, bezogen auf den montierten Zustand der elektrischen Maschine, die Ausnehmungen bezüglich einer Radialrichtung zu der Seite des Rotors hin, die dem Stator zugewandt ist, jeweils geschlossen sind.

Die Erfindung beruht mitunter auf dem Gedanken, einen Nachteil des aus dem Stand der Technik bekannten Konzepts, bei dem entsprechende Ausnehmungen vorgesehen sind, zu überwinden. So ist bei der vorliegenden Erfindung vorgesehen, dass die wenigstens eine Ausnehmung zu der Richtung hin, die in einem montierten Zustand der jeweiligen elektrischen Maschine dem Stator zugewandt ist, geschlossen ist und dort somit, im Gegensatz zu den Systemen aus dem Stand der Technik, keine Öffnung aufweist, die in einen außerhalb der jeweiligen Ausnehmung führt. Hierdurch wird vorteilhaft bewirkt, dass bei der Rotation des Rotors keine zusätzlichen Luftverwirbelungen an den Ausnehmungen auftreten, was bei Vorhandensein entsprechender Öffnungen der Fall wäre. So ist zwischen einer sich entlang der Umfangsrichtung erstreckenden Außenfläche des Rotors oder eines Blechpakets des Rotors und einer sich entlang der Umfangsrichtung erstreckenden Außenfläche des Stators, die der Außenfläche des Rotors gegenüberliegt, typischerweise ein Luftspalt vorhanden, wobei eine zu diesem Spalt hin offene Ausnehmung bei der Rotation des Rotors bewirken würde, dass die Luft innerhalb des Spaltes verwirbelt wird, was zu einer Bremswirkung bezüglich der Rotation des Rotors führt. Eine solche Bremswirkung tritt bei der vorliegenden Erfindung nicht auf, sodass sich im Rahmen der vorliegenden Erfindung ein verbesserter Wirkungsgrad für eine entsprechende elektrische Maschine ergibt. Insbesondere werden Unebenheiten, also etwa Ecken und Kanten, im Bereich der Außenfläche des Rotors vermieden, die im Falle entsprechend offener Ausnehmungen zwangsläufig vorhanden sind. Diese Außenfläche ist mithin im Rahmen der vorliegenden Erfindung stattdessen bevorzugt eben beziehungsweise glatt. Die Außenfläche des Rotors sowie die Außenfläche des Stators sind bevorzugt zylindrisch ausgebildet und konzentrisch zueinander angeordnet.

Erfindungsgemäß ist vorgesehen, dass die Ausnehmungen bezüglich der Radialrichtung zu der Seite hin, die, bezogen auf den montierten Zustand der elektrischen Maschine, dem Stator zugewandt ist, jeweils geschlossen sind. Eine Querschnittsfläche der jeweiligen Ausnehmung kann bezüglich einer senkrecht auf der Längsrichtung stehenden Schnittfläche definiert sein. Die geometrische Form der Querschnittsfläche der jeweiligen Ausnehmung besitzt eine zumindest zu der zum Stator weisenden Richtung geschlossene, die Querschnittsfläche begrenzende Umfangslinie. Die Umfangslinie ist bevorzugt auch bezüglich der übrigen, also bezüglich aller Richtungen geschlossen. Die Ausnehmungen weisen mithin bevorzugt lediglich zwei Öffnungen auf, nämlich eine Öffnung an jeder der beiden Stirnseiten des Rotors. Innerhalb der Ausnehmungen ist bevorzugt, insbesondere ausschließlich, Luft angeordnet, sodass die Ausnehmungen auch als Luftkavitäten bezeichnet werden können.

Die Ausnehmungen sind entlang der Umfangsrichtung unterschiedlich zueinander ausgestaltet beziehungsweise weisen verschiedene geometrische Formen respektive Ausprägungen auf. Das bedeutet, dass für zumindest eines Teils der Ausnehmungen gilt, dass sich deren Querschnittsflächen zueinander ändern. Bezogen auf die Umfangsrichtung ist denkbar, dass sich die entsprechende Querschnittsflächen von Ausnehmung zu Ausnehmung ändert. Die Querschnittsflächen können sich entlang eines kompletten entlang der Umfangsrichtung verlaufenden Umlaufs zyklisch ändern, sodass eine aufgrund dieser Änderungen ergebende Abweichung des Massenschwerpunktes des Rotors von der zentral durch den Rotor verlaufenden Längsrichtung vermieden wird. Hierdurch wird eine ansonsten im Fall der Rotation des Rotors auftretende Umwucht vermieden. Bezüglich der Änderungen ist denkbar, dass sich ein Wert zumindest einer der Abmessungen und/oder ein Wert des Flächeninhalts der Querschnittsflächen entlang der Umfangsrichtung, insbesondere zyklisch, bevorzugt gemäß einer Sinusfunktion, ändert.

Die elektrische Maschine ist bevorzugt ein Innenläufer, bei der der Rotor in einem radial weiter innen liegenden Bereich angeordnet ist als der Stator. In diesem Fall sind die Ausnehmungen, bezogen auf den montierten Zustand der elektrischen Maschine, zu der radial nach außen weisenden Richtung hin geschlossen. Grundsätzlich ist auch denkbar, dass die elektrische Maschine ein Außenläufer ist, bei der der Rotor in einem radial weiter außen liegenden Bereich angeordnet ist als der Stator. In diesem Fall sind die Ausnehmungen, bezogen auf den montierten Zustand der elektrischen Maschine, zu der radial nach innen weisenden Richtung hin geschlossen.

Nachfolgend werden für die vorliegende Erfindung relevante Raumrichtungen definiert. So ist der Rotor, bezogen auf den montierten Zustand der elektrischen Maschine, drehbar um eine Rotationsachse gelagert, etwa vermittels entsprechender Rotorlager, die den Rotor mit dem Stator und/oder einem Gehäuse der elektrischen Maschine verbinden. Die Längsrichtung des Rotors beziehungsweise der elektrischen Maschine erstreckt sich entlang der Rotationsachse. Der Rotor und/oder der Stator sind, bezogen auf die Rotationsachse und abgesehen von den Änderungen der Ausnehmungen, bevorzugt symmetrisch ausgebildet. Die Radialrichtung erstreckt sich senkrecht von der Längsrichtung weg. Die Umfangsrichtung erstreckt sich tangential entlang der konzentrisch bezüglich der Längsrichtung verlaufenden Kreise, oder, mit anderen Worten, sowohl senkrecht entlang der Längsrichtung als auch entlang der Radialrichtung. Die Ausnehmungen weisen jeweils bevorzugt eine längliche Ausdehnung auf, wobei sich eine entlang dieser Ausdehnung erstreckende Axialrichtung bevorzugt parallel zur Längsrichtung erstreckt. Die Querschnittsfläche der jeweiligen Ausnehmung bleibt bevorzugt entlang der Axialrichtung konstant.

Bevorzugt weist der erfindungsgemäße Rotor mehrere entlang der Umfangsrichtung verteilt angeordnete und sich entlang der Radialrichtung sowie entlang der Längsrichtung erstreckende Rotorzähne auf. Im Falle des Innenläufers erstrecken sich die Rotorzähne radial nach außen und im Falle des außen Läufers radial nach innen. Eine Ausdehnung der Rotorzähne entlang der Umfangsrichtung, also eine Breite des jeweiligen Rotorzahns, ist bevorzugt deutlich geringer ist als die bezüglich der Radial- und der Umfangsrichtung vorgesehenen Ausdehnungen. So entspricht die Breite des Rotorzahns bevorzugt weniger als die Hälfte, besonders bevorzugt weniger als ein Viertel, der radialen Ausdehnung respektive Länge des jeweiligen Rotorzahns.

Bevorzugt ist zwischen zwei benachbarten Rotorzähnen jeweils eine Nut gebildet, in der jeweils ein Stab eines Kurzschlusskäfigs aufgenommen ist. Der Kurzschlusskäfig umfasst typischerweise mehrere sich entlang der Längsrichtung erstreckende Stäbe, die jeweils in einer der Nuten angeordnet sind. Die Querschnittsfläche des jeweiligen Stabs entspricht bevorzugt der Querschnittsfläche der Nut, in der dieser Stab angeordnet ist. So sind die Stäbe bevorzugt spielfrei in der jeweiligen Nut aufgenommen, wobei, mit anderen Worten, kein Freiraum zwischen dem jeweiligen Stab und einer Innenfläche der jeweiligen Ausnehmung vorhanden ist. Die Rotorzähne und/oder die Nuten können untereinander gleiche Geometrien aufweisen.

Denkbar ist, dass die Stäbe über stirnseitige Endflächen des Rotors überstehen. Die Stäbe können an ihren stirnseitigen Enden über einen Endring des Kurzschlusskäfigs elektrisch miteinander kontaktiert sein, sodass die Stäbe auch als Kurzschlussstäbe bezeichnet werden können. So ist bevorzugt an jeder der beiden stirnseitigen Endflächen des Rotors respektive des Blechpakets des Rotors ein Endring vorgesehen. Der Kurzschlusskäfig, also die Stäbe sowie der Endring respektive die Endringe, bestehen aus einem elektrisch leitfähigen Material, etwa Kupfer.

Bevorzugt erstrecken sich die Ausnehmungen jeweils durch einen der Rotorzähne. Im Falle des Innenläufers sind die Ausnehmungen in einem radial äußeren Abschnitt des Rotors vorgesehen, beispielsweise in einer, bezogen auf die radiale Ausdehnung des Rotors, äußeren Hälfte des Rotors. Folglich verursachen die Ausnehmungen eine höhere Ausprägung der Asymmetrie der magnetischen Eigenschaften des Rotors gegenüber dem Fall, bei dem die Ausnehmungen radial innen angeordnet wären. Im Falle des Außenläufers sind die Ausnehmungen in einem radial inneren Abschnitt des Rotors vorgesehen, beispielsweise in einer, bezogen auf die radiale Ausdehnung des Rotors, inneren Hälfte des Rotors.

Besonders bevorzugt erstreckt sich jede der Ausnehmungen durch einen Zahnkopfbereich des jeweiligen Rotorzahns. Der Zahnkopfbereich ist insbesondere das bezüglich der Radialrichtung offene beziehungsweise freie Ende des jeweiligen Rotorzahns. Bezogen auf den Innenläufer ist der Zahnkopfbereich radial außen und auf den Außenläufer radial innen an dem jeweiligen Rotorzahn angeordnet. Der Zahnkopfbereich kann konkret als eine radial äußere respektive innere Hälfte des jeweiligen Rotorzahns definiert sein.

Denkbar ist, dass sich durch jeden der Rotorzähne genau eine der Ausnehmungen erstreckt. Das bedeutet, dass die Anzahl der Rotorzähne der Anzahl der Ausnehmungen entspricht. Denkbar ist auch, dass die Anzahl der sich durch den jeweiligen Rotorzahn erstreckenden Ausnehmungen für die Rotorzähne gleich ist. In diesem Fall entspricht die Anzahl der Ausnehmungen einem ganzzahligen Vielfachen der Anzahl der Rotorzähne.

Besonders bevorzugt ist vorgesehen, dass die wenigstens eine Ausnehmung, die sich durch einen der Rotorzähne erstreckt, bezüglich einer sich entlang der Radialrichtung erstreckenden Zentralachse des jeweiligen Rotorzahns symmetrisch angeordnet und ausgebildet ist. So beeinflussen die Ausnehmungen den örtlichen Verlauf und insbesondere die Dichte der durch den jeweiligen Rotorzahn verlaufenden magnetischen Feldlinien, wobei durch die im Rahmen dieser Ausführungsform vorgesehenen Symmetrien der Ausnehmungen unnötige Asymmetrien bei den magnetischen Feldlinien, insbesondere lokale Spitzen in deren Dichte, vermieden werden.

Bevorzugt umfasst der erfindungsgemäße Rotor ein mehrere gestapelt angeordnete Bleche umfassendes Blechpaket, wobei entlang der Längsrichtung fluchtende Aussparungen, insbesondere Ausstanzungen, der Bleche die Ausnehmungen bilden. Bevorzugt sind die Bleche identisch zueinander ausgebildet. Die Bleche bestehen bevorzugt aus Eisen.

Nachfolgend werden zwei denkbare Ausführungen betreffend die Abgeschlossenheit der Ausnehmungen bezüglich der dem Stator zugewandten Richtung erläutert. So ist etwa denkbar, dass wenigstens eine der Ausnehmungen, insbesondere alle Ausnehmungen, radial beabstandet zu der sich entlang der Umfangsrichtung erstreckenden Außenfläche des Blechpakets angeordnet ist. Anders ausgedrückt sind im Falle des Innenläufers ein maximaler, radialer Abstand zwischen der jeweiligen Ausnehmung und der Rotationsachse kleiner als ein radialer Abstand der Außenfläche des Rotors zu der Rotationsachse. Im Falle des Außenläufers ist entsprechend ein minimaler, radialer Abstand zwischen der jeweiligen Ausnehmung und der Rotationsachse größer als der radiale Abstand der Außenfläche des Rotors zu der Rotationsachse. Bezogen auf die Querschnittsfläche ist die jeweilige Ausnehmung mithin allseitig von dem Material des Blechpakets umschlossen.

Zudem oder alternativ ist denkbar, dass wenigstens eine der Ausnehmungen, insbesondere alle Ausnehmungen, unmittelbar an der oder einer sich entlang der Umfangsrichtung erstreckenden Außenfläche des Blechpakets ausgebildet ist, wobei das Blechpaket, bezogen auf die Radialrichtung, innerhalb oder außerhalb einer Rotorhülse angeordnet ist, die die Ausnehmungen zu der Seite des Rotors hin abschließt. Das Blechpaket ist innerhalb der Rotorhülse angeordnet, wenn die jeweilige elektrische Maschine ein Innenläufer ist. Das Blechpaket ist außerhalb der Rotorhülse angeordnet, wenn die jeweilige elektrische Maschine ein Außenläufer ist. Im Rahmen dieser Ausführungsform ist die entsprechende Ausnehmung, bezogen lediglich auf das Blechpaket, zu dem Stator hin offen, wobei die erfindungsgemäß vorgesehene Abgeschlossenheit der jeweiligen Ausnehmung durch die Rotorhülse bewirkt wird. Die Rotorhülse besteht bevorzugt aus einem magnetisch nicht leitfähigen Material, etwa aus einem kohlenstofffaserverstärkten und/oder einem glasfaserverstärkten Kunststoff.

Insbesondere bezogen auf die senkrecht auf der Längsrichtung stehenden Schnittebene ist denkbar, dass die Querschnitte der Ausnehmungen runde und/oder polygonale Formen aufweisen. Bezüglich der runden Formen sind kreisrunde und/oder elliptische Formen denkbar. Die Formen der Querschnitte der Ausnehmungen können sich hinsichtlich der jeweiligen Durchmesser unterscheiden. Bezüglich der polygonalen Formen sind rechteckige oder trapezförmige Formen denkbar. Die Formen der Querschnitte der Ausnehmungen können sich hinsichtlich der jeweiligen Seitenlängen unterscheiden. Insbesondere kann sich eine Breite der rechteckigen Ausnehmungen entlang der Umfangsrichtung und eine Höhe entlang der Radialrichtung erstrecken. Hierbei können sich die Formen der Querschnitte bezüglich der Breite oder/oder der Höhe unterscheiden.

Die vorliegende Erfindung betrifft ferner eine elektrische Maschine, umfassend einen Stator und einen bezüglich des Stators rotierbar gelagerten Läufer. Erfindungsgemäß gelöst wird die Aufgabe bei einer solchen elektrischen Maschine dadurch, dass der Läufer ein Rotor gemäß der vorangehenden Beschreibung ist. Die elektrische Maschine kann ein Innenläufer oder ein Außenläufer sein. Die elektrische Maschine kann eine Asynchronmaschine sein, wobei alle eingangs zu Asynchronmaschinen erläuterten Aspekte auf die erfindungsgemäße elektrische Maschine übertragbar sind. Alle im Zusammenhang mit dem erfindungsgemäßen Rotor erläuterten Vorteile, Merkmale und Aspekte sind gleichermaßen auf die erfindungsgemäße elektrische Maschine übertragbar sind und umgekehrt.

Bevorzugt weist der Stator mehrere entlang der Umfangsrichtung verteilt angeordnete und sich entlang der Radialrichtung sowie entlang der Längsrichtung erstreckende Statorzähne auf, wobei zwischen zwei benachbarten Statorzähnen jeweils eine Statornut gebildet ist, in der Statorwicklungen aufgenommen sind. Die im Zusammenhang mit den Rotorzähnen erläuterten Gesichtspunkte, sofern technisch sinnvoll, sind gleichermaßen auf die Statorzähne übertragbar. Die Statorwicklungen werden bevorzugt von den Statorzähnen getragen. Das bedeutet, dass wenigstens ein die Statorwicklungen bildender Leiterdraht um wenigstens einen der Statorzähne gewickelt ist. Die Statorwicklungen realisieren elektromagnetische Feldspulen, die im Falle einer elektrischen Bestromung die Bildung eines seitens des Stators vorliegenden elektromagnetischen Wechselfeldes bewirken, das wiederum zur Erzeugung des mittels der elektrischen Maschine generierbaren Antriebs- oder Traktionsmoments mit dem Rotor, insbesondere mit dem Kurzschlusskäfig des Rotors, wechselwirkt. Die Statorwicklungen können verteilte oder konzentrierte Wicklungen sein.

Bevorzugt ist die elektrische Maschine mit einem Antriebsstrang eines Kraftfahrzeugs verbindbar, wobei mittels der elektrischen Maschine, bezogen auf den mit dem Antriebsstrang verbundenen Zustand, ein Traktionsmoment generierbar und über den Antriebsstrang auf die Räder des Kraftfahrzeugs übertragbar ist. So kann etwa ein offenes, insbesondere aus einem Gehäuse der elektrischen Maschine herausragendes, Ende einer sich entlang der Rotationsachse erstreckenden Rotorwelle des Rotors vorgesehen sein. Dieses Ende sowie eine Komponente des Antriebsstrangs kann jeweils ein Verbindungsmittel, etwa einen Verbindungsflansch, aufweisen, mittels dem eine, insbesondere rotationsfeste, mechanische Verbindung zwischen der Welle und dem Antriebsstrang herstellbar ist. Unter dem Antriebsstrang sind grundsätzlich alle Komponenten zu verstehen, über die eine mechanische Kopplung zwischen der elektrischen Maschine und den Rädern herstellbar ist. Der Antriebsstrang kann mithin Antriebswellen und/oder Getriebe, insbesondere Schalt- und/oder Differenzialgetriebe und/oder Kupplungen umfassen.

Ferner betrifft die vorliegende Erfindung ein Kraftfahrzeug. Die Aufgabe wird erfindungsgemäß ferner dadurch gelöst, dass das Kraftfahrzeug einen als eine elektrische Maschine gemäß der vorangehenden Beschreibungspassage ausgebildeten Traktionsmotor umfasst. Erfindungsgemäß ist die elektrische Maschine mit dem Antriebsstrang des Kraftfahrzeugs verbunden, wobei mittels der elektrischen Maschine ein Traktionsmoment generierbar und über den Antriebsstrang auf Räder des Kraftfahrzeugs übertragbar ist. Das erfindungsgemäße Kraftfahrzeug kann mithin ein Elektro- oder ein Hybridfahrzeug sein. Alle im Zusammenhang mit dem erfindungsgemäßen Rotor und der erfindungsgemäßen elektrischen Maschine erläuterten Vorteile, Merkmale und Aspekte sind gleichermaßen auf das erfindungsgemäße Kraftfahrzeug übertragbar und umgekehrt.

Schließlich betrifft die vorliegende Erfindung ein Verfahren zur Bestimmung einer Rotorlage eines Läufers einer elektrischen Maschine gemäß der obigen Beschreibungspassage. Erfindungsgemäß wird die Aufgabe dadurch gelöst, dass das Verfahren die folgenden Schritte umfasst:
- Erzeugen einer seitens des Stators vorliegenden Wechselspannung,
- Generieren eines seitens des Stators vorliegenden elektromagnetischen Wechselfeldes vermittels der seitens des Stators vorliegenden Wechselspannung,
- Induzieren einer seitens des Rotors vorliegenden Wechselspannung vermittels des seitens des Stators vorliegenden Wechselfeldes,
- Generieren eines seitens des Rotors vorliegenden elektromagnetischen Wechselfeldes vermittels der seitens des Rotors vorliegenden Wechselspannung, wobei dieses Wechselfeld aufgrund der Unterschiede der geometrischen Formen der Querschnitte der Ausnehmungen entlang der Umfangsrichtung von der aktuellen Rotationsstellung des Rotors abhängt,
- Induzieren einer seitens des Stators vorliegenden Rückkopplungsspannung vermittels des seitens des Rotors vorliegenden elektromagnetischen Wechselfeldes,
- Bestimmen der aktuellen Rotationsstellung des Rotors anhand der Rücckopplungsspannung.

Alle im Zusammenhang mit dem erfindungsgemäßen Rotor, der erfindungsgemäßen elektrischen Maschine und/oder dem erfindungsgemäßen Kraftfahrzeug erläuterten Vorteile, Merkmale und Aspekte sind gleichermaßen auf das erfindungsgemäße Verfahren übertragbar und umgekehrt.

Bei dem erfindungsgemäßen Verfahren wird eine seitens des Rotors auftretende Reaktion vermittels elektromagnetischer Induktion aufgrund der seitens des Stators vorliegenden Wechselspannung beziehungsweise des seitens des Stators vorliegenden Wechselfeldes verursacht, wobei diese Reaktion wiederum von der aktuellen Rotorlage abhängt. Diese Reaktion besteht darin, dass seitens des Rotors eine entsprechende Wechselspannung induziert wird. Diese Wechselspannung verursacht wiederum eine seitens des Stators erfolgende Reaktion, nämlich die Generierung der entsprechend seitens des Stators vorliegenden Rückkopplungsspannung. Da die seitens des Rotors erzeugte Wechselspannung von der aktuellen Rotorlage abhängt, hängt auch die als Reaktion hierauf induzierte Rückkopplungsspannung von der aktuellen Rotorlage ab. Dies erlaubt es, dass anhand der Rückkopplungsspannung eine Information hinsichtlich der aktuellen Rotorlage gewonnen werden kann. Anstelle einer Verwendung eines seitens des Rotors vorliegenden Lagesensors, die mit den oben beschriebenen Nachteilen einhergehen würde, erfolgt vorliegend die Erfassung der aktuellen Rotorlage, deren Kenntnis im Rahmen der Steuerung der elektrischen Maschine erforderlich ist, ausschließlich kabellos und vermittels elektromagnetischen Wechselwirkungen respektive Induktionen zwischen dem Stator und dem Rotor und umgekehrt. Grob zusammengefasst wird bei dem erfindungsgemäßen Vorgehen eine Auswertung einer doppelt-verketteten Spannung realisiert.

Besonders bevorzugt sind ein elektrischer Energiespeicher des Kraftfahrzeugs und Statorwicklungen des Stators über eine Leistungselektronikeinrichtung miteinander verbunden. Der elektrische Energiespeicher des Kraftfahrzeugs, der auch als Akkumulator bezeichnet werden kann, dient der Speicherung elektrischer Energie, die im Rahmen des Fahrbetriebs des Kraftfahrzeugs mittels der elektrischen Maschine in kinetische Energie umgewandelt wird. Der elektrische Energiespeicher kann ein Lithium-Ionen-Akkumulator sein. Die Leistungselektronikeinrichtung realisiert mithin zumindest einen Gleich- beziehungsweise Wechselrichter. Mittels der Leistungselektronikeinrichtung wird eine seitens des Energiespeichers bereitgestellte Gleichspannung in die seitens des Stators vorliegende Wechselspannung umgewandelt, die anschließend den Statorwicklungen zugeführt wird, sodass das seitens des Stators vorliegende elektromagnetische Wechselfeld vermittels der seitens des Stators vorliegenden Wechselspannung generiert wird.

Denkbar ist, dass auf die seitens des Stators vorliegende Wechselspannung zumindest temporär, das heißt zeitlich vorübergehend, ein bezüglich dieser Wechselspannung höherfrequentes Aufprägesignal aufgeprägt wird, wobei die aktuelle Rotationsstellung des Rotors anhand des aufgrund des Aufprägesignals resultierenden Anteils der Rückkopplungsspannung bestimmt wird. Die seitens des Stators vorliegende Wechselspannung kann zumindest im Wesentlichen sinusförmig sein. Das höherfrequente Aufprägesignal kann ebenfalls sinusförmig sein, wobei eine Periode des Aufprägesignals kürzer als eine Periode der Wechselspannung und eine Amplitude des Aufprägesignals kleiner als eine Amplitude der Wechselspannung sein kann. Das Aufprägesignal kann als eine Oberschwingung der seitens des Stators vorliegenden Wechselspannung bezeichnet beziehungsweise verstanden werden. Die seitens des Stators vorliegende Wechselspannung wird vorliegend im Zuge der Generierung des Antriebs- beziehungsweise Traktionsmoments genutzt. Das Aufprägesignal ist gegenüber der Wechselspannung hinreichend schwach, sodass aufgrund des Aufprägesignals auftretende Änderungen im Traktionsmoment vernachlässigbar sind. Gleichwohl ist die aufgrund des Aufprägesignals verursachte und im Rahmen der doppel-verketteten Spannung auftretende Rückkopplung im Zuge der Bestimmung der aktuellen Rotorlage nutzbar.

Zur Durchführung des erfindungsgemäßen Verfahrens kann eine hierzu eingerichtete Steuerungseinrichtung vorgesehen sein. Die Steuerungseinrichtung kann eine Komponente der elektrischen Maschine oder des Kraftfahrzeugs sein. Die Steuerungseinrichtung kann dazu eingerichtet sein, den Betrieb der elektrischen Maschine im Rahmen der Generierung des Traktionsmoments zu steuern. Die Steuerungseinrichtung ist mithin dazu eingerichtet, in diesem Kontext vorgesehene Steuersignale zu generieren und an die jeweiligen Komponenten auszugeben. So ist insbesondere der Betrieb der Leistungselektronikeinrichtung und mithin die Erzeugung der seitens des Stators vorliegenden Wechselspannung vermittels der Steuerungseinrichtung steuerbar. Konkret kann die Steuerungseinrichtung anhand eines, etwa fahrerseitig oder seitens einer zumindest teilautonomen Fahrzeugsteuerung vorgegebenen, Vorgabesignals die Generierung der Steuersignale derart bewerkstelligen, dass die Steuersignale die Erzeugung eines entsprechend vorgegebenen Traktions- oder Bremsmoments mittels der elektrischen Maschine bewirken. Weiterhin kann mittels den Steuersignalen die Erzeugung des Aufprägesignals steuerbar sein. Zudem oder alternativ kann mittels einer seitens der Steuerungseinrichtung implementierten Software eine Auswertung der Rückkopplungsspannung zur Bestimmung einer die aktuelle Rotorlage betreffenden Information durchgeführt werden.

Weitere Vorteile, Merkmale und Einzelheiten der vorliegenden Erfindung ergeben sich aus den nachfolgend dargelegten Ausführungsbeispielen sowie anhand der Figuren. Diese zeigen schematisch:
- Fig. 1:: Prinzipskizze eines erfindungsgemäßen Kraftfahrzeugs gemäß einem Ausführungsbeispiel umfassend eine erfindungsgemäße elektrische Maschine gemäß einem Ausführungsbeispiel, wobei anhand dieses Kraftfahrzeugs ein erfindungsgemäßes Verfahren gemäß einem Ausführungsbeispiel erläutert wird,
- Fig. 2:: eine Querschnittsdarstellung eines Sektors der elektrischen Maschine des Kraftfahrzeugs der Fig. 1, umfassend einen erfindungsgemäßen Rotor gemäß einem Ausführungsbeispiel und einen Stator, und
- Fig. 3:: eine Querschnittsdarstellung eines Sektors eines erfindungsgemäßen Rotors gemäß einem weiteren Ausführungsbeispiel.

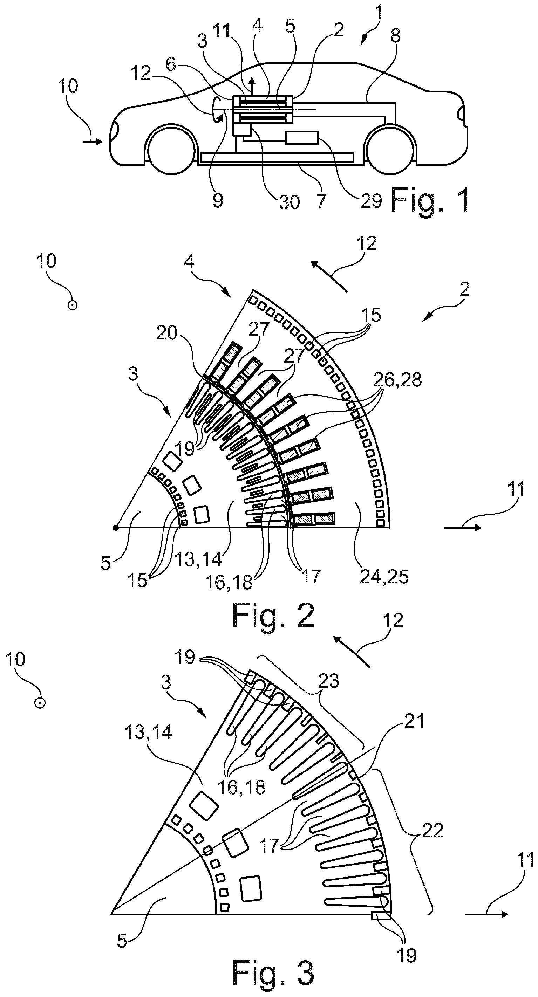

Fig. 1 zeigt ein erfindungsgemäßes Kraftfahrzeug 1 gemäß einem Ausführungsbeispiel, umfassend eine erfindungsgemäße elektrische Maschine 2 gemäß einem Ausführungsbeispiel. Die elektrische Maschine 2 umfasst einen Läufer, der ein erfindungsgemäßer Rotor 3 gemäß einem Ausführungsbeispiel ist und einen Stator 4. Die elektrische Maschine 2 ist ein Innenläufer. Das heißt, dass der Rotor 3 in einem Bereich der elektrischen Maschine 2 angeordnet ist, der radial weiter innen liegt als ein Bereich, in dem der Stator 4 angeordnet ist. Eine Rotorwelle 5 des Rotors 3 ist, etwa mittels eines Kugel- oder Walzenlagers, drehbar an einem Gehäuse 6 der elektrischen Maschine 2 gelagert. Grundsätzlich ist es im Rahmen der vorliegenden Erfindung auch denkbar, dass es sich bei der elektrischen Maschine 2 um einen Außenläufer handelt, wobei in diesem Fall die Positionen des Rotors 3 und des Stators 4 vertauscht sind.

Die als eine Asynchronmaschine ausgebildete elektrische Maschine 2 ist dazu eingerichtet, eine in einem elektrischen Energiespeicher 7 des Kraftfahrzeugs 1 gespeicherte elektrische Energie in Bewegungsenergie des Kraftfahrzeugs 1 umzuwandeln und umgekehrt. Ein generiertes Antriebs- beziehungsweise Traktionsmoment, das für den Vortrieb des Kraftfahrzeugs 1 nutzbar ist, ist von der elektrischen Maschine 2 auf einen Antriebsstrang 8 des Kraftfahrzeugs 1 übertragbar. Hierfür weist die Rotorwelle 5 ein entsprechendes Verbindungsmittel auf, etwa einen Verbindungsflansch oder dergleichen. Das Antriebsmoment ist bei dem gezeigten Ausführungsbeispiel beispielhaft nur auf die Hinterräder übertragbar, kann aber zusätzlich oder alternativ auch auf die Vorderräder übertragbar sein.

Nachfolgend werden, bezogen auf die elektrische Maschine 2, Definitionen bezüglich relevanter Raumrichtungen eingeführt. So ist die Rotorwelle 5 und mithin der Rotor 3 um eine Rotationsachse 9 drehbar gelagert, die sich entlang einer Längsrichtung 10 der elektrischen Maschine 2 erstreckt. Senkrecht zur Längsrichtung 10 erstreckt sich eine Radialrichtung 11. Eine Umfangsrichtung 12 steht senkrecht auf der Radialrichtung 11. Das heißt, dass sich ein um die Rotationsachse 9 rotierender Punkt entlang der Umfangsrichtung 12 bewegt.

Nachfolgend werden Details bezüglich des Rotors 3 und des Stators 4 anhand der Fig. 2 erläutert. Fig. 2 zeigt eine Querschnittsdarstellung eines Sektors der elektrischen Maschine 2, wobei die Schnittebene senkrecht auf der Längsrichtung 10 steht. Der Rotor 3 umfasst ein laminiertes Blechpaket 13, das aus mehreren aus Eisen bestehenden Blechen 14 gebildet ist, die entlang der Längsrichtung 10 gestapelt sind. Ersichtlich umfassen die Bleche 14 mehrere Aussparungen beziehungsweise Ausstanzungen, die entlang der Längsrichtung 10 fluchten. Einige der Ausstanzungen bilden Kühlkanäle 15 zur Führung eines Kühlfluids.

Zudem bilden einige der Ausstanzungen Nuten 16 des Rotors 3, die, bezogen auf die Radialrichtung 11, seitlich von gleichmäßig entlang der Umfangsrichtung 12 verteilten Rotorzähnen 17 begrenzt werden. Innerhalb der Nuten 16 sind Stäbe 18 eines Kurzschlusskäfigs aufgenommen. Die Nuten 16, die Rotorzähne 17 und die Stäbe 18 erstrecken sich hauptsächlich entlang der Längsrichtung 10 sowie der Radialrichtung 11. Die Querschnittsfläche der Stäbe 18 entspricht der Querschnittsfläche der jeweiligen Nut 16, sodass die Stäbe 18 spielfrei in der jeweiligen Nut 16 aufgenommen sind. Obgleich dies aus den Figuren nicht ersichtlich wird, stehen die Stäbe 18 geringfügig über stirnseitige Endflächen des Blechpakets 13 hinaus und sind an ihren stirnseitigen Endflächen mittels eines Endrings des Kurzschlusskäfigs elektrisch miteinander kontaktiert. Die Stäbe 18 sowie die Endringe bestehen aus Kupfer.

Schließlich bilden einige der Ausstanzungen Ausnehmungen 19, die mit Luft gefüllt sind und mithin auch als Luftkavitäten bezeichnet werden können. Die geometrischen Formen der Querschnitte der Ausnehmungen 19 unterscheiden sich untereinander entlang der Umfangsrichtung 12. Der diesbezügliche Zweck wird später im Zusammenhang mit der Erläuterung des erfindungsgemäßen Verfahrens dargelegt.

Bezüglich der Ausnehmungen 19 ist vorgesehen, dass diese bezüglich der Radialrichtung 11 zu der dem Stator 4 zugewandten Seite hin geschlossen sind. Überdies sind im vorliegend gezeigten Ausführungsbeispiel die Ausnehmungen 19 im Querschnitt betrachtet zu allen Seiten hin geschlossen.

Die Ausnehmungen 19 weisen lediglich an den stirnseitigen Enden des Blechpakets 13 Öffnungen auf. Die Ausnehmungen 19 sind jeweils radial beabstandet zu einer sich entlang der Umfangsrichtung 12 erstreckenden Außenfläche des Blechpakets 13 angeordnet. Diese Außenfläche begrenzt einen hohlzylinderförmigen, eine Breite von wenigen Millimetern aufweisenden und zwischen dem Rotor 3 und dem Stator 4 angeordneten Luftspalt 20. Ersichtlich würde in dem Luftspalt 20 vorhandene Luft bei der Rotation des Rotors 3 verwirbelt werden, wenn die Ausnehmungen 19 bezüglich der dem Stator 4 und mithin dem Luftspalt 20 zugewandten radialen Richtung offen wären. Der Aspekt, dass die Ausnehmungen 19 zum Luftspalt 20 hin geschlossen sind, bewirkt die Vermeidung einer ansonsten auftretenden Hemmung der Rotation des Rotors 3 und somit eine Verbesserung des Wirkungsgrades der elektrischen Maschine 2.

Bezüglich der konkreten geometrischen Ausgestaltung der Ausnehmungen 19 ist vorgesehen, dass deren Querschnitt jeweils entlang der Längsrichtung 10 gleichbleibt. Zudem erstrecken sich die Ausnehmungen 19 jeweils durch einen der Statorzähne 17, wobei jeder der Statorzähne 17 eine gleiche Anzahl an Ausnehmungen 19 aufweist, insbesondere, wie vorliegend, genau eine. Zur Vermeidung von Asymmetrien des magnetischen Flusses innerhalb der Statorzähne 17 ist jede der Ausnehmungen 19 bezüglich einer entlang der Radialrichtung 11 verlaufenden Zentralachse des jeweiligen Rotorzahns 17 symmetrisch ausgebildet. Sofern im Rahmen einer konkreten Ausführungsform der Erfindung bei jedem der Statorzähne 17 mehrere Ausnehmungen 19 vorgesehen wären, dann wären diese bevorzugt zudem symmetrisch um die Zentralachse des jeweiligen Rotorzahns 17 angeordnet.

Bezüglich der Querschnittsgeometrie der Ausnehmungen 19 ist vorgesehen, dass die Querschnitte der Ausnehmungen 19 polygonale, nämlich rechteckige, Formen aufweisen. Dies ist jedoch nur eine beispielhafte Ausgestaltung, wobei zusätzlich oder alternativ auch runde, insbesondere elliptische oder kreisförmige, Querschnittsgeometrien denkbar sind. Ebenfalls beispielhaft wird die entlang der Umfangsrichtung 12 vorhandene Änderung der Geometrie der Querschnitte der Ausnehmungen 19 dadurch realisiert, dass die jeweils dieselbe Breite aufweisenden Rechtecke sich bezüglich ihrer Höhe ändern. So ändert sich die Höhe dieser Rechtecke entlang der Umfangsrichtung 12 zyklisch von einer maximalen Höhe über eine minimale Höhe wieder zu der maximalen Höhe und so weiter.

Bevor nachfolgend Details bezüglich des Stators 4 anhand der Fig. 2 erläutert werden, wird zunächst eine weitere denkbare Ausführungsform des erfindungsgemäßen Rotors 3 anhand der Fig. 3 erläutert. Diese Figur zeigt eine der Fig. 2 entsprechende Querschnittsdarstellung, wobei lediglich der Rotor 3 gezeigt ist. So gelten alle im Zusammenhang mit der elektrischen Maschine 2 der Fig. 2 erläuterten Aspekte, sofern nicht explizit hiervon abweichend, gleichermaßen für das in der Fig. 3 gezeigte Ausführungsbeispiel. So unterscheidet sich der Rotor 3 der Fig. 3 zu dem Rotor 3 der Fig. 2 dadurch, dass die Ausnehmungen 19 zum Stator 4 respektive Luftspalt 20 nicht über das Material des Blechpakets 13 abgeschlossen sind. Stattdessen sind die Ausnehmungen 19 unmittelbar an der sich entlang der Umfangsrichtung 12 erstreckenden Außenfläche des Blechpakets 13 ausgebildet. Um zu vermeiden, dass die Ausnehmungen zum Luftspalt 20 hin offen sind, ist das Blechpaket 13, bezogen auf die Radialrichtung 11, innerhalb einer Rotorhülse 21 angeordnet, die die Ausnehmungen 19 zum Luftspalt 20 hin abschließt. Im Falle der als der Außenläufer ausgebildeten elektrischen Maschine 2 wäre im Rahmen dieser Ausführungsform das Blechpaket 13 radial außerhalb der Rotorhülse 21 angeordnet.

Ein weiterer Unterschied zwischen den anhand der Figuren 2 und 3 erläuterten Ausführungsbeispiele besteht darin, dass sich die Ausnehmungen 19 bei der Fig. 3 jeweils durch einen Zahnkopfbereich des jeweiligen Rotorzahns 17 erstrecken. Unter dem Zahnkopfbereich ist das radial äußere beziehungsweise offene Ende des jeweiligen Rotorzahns 17 gemeint.

Gleichermaßen wie in Fig. 2 sind die Ausnehmungen bei dem in der Fig. 3 gezeigten Ausführungsbeispiel in ihrem Querschnitt betrachtet rechteckig ausgebildet, wobei in Fig. 3 diesbezüglich zwei Bereiche 22, 23 dargestellt sind, die jeweils im Rahmen der Erfindung denkbare Variationen bezüglich der Änderung der Querschnittsfläche der Ausnehmungen 19 entlang der Umfangsrichtung 12 zeigen. Während in dem Bereich 22 die Änderung der Querschnittsfläche, gleichermaßen wie bei der in der Fig. 2 gezeigten Ausführungsform, durch die Änderung der Höhe des jeweiligen Rechtecks bei gleichbleibender Breite realisiert wird, ist im Bereich 23 der diesbezüglich andere Fall dargestellt, bei dem sich die Breite des Rechtecks bei gleichbleibender Höhe ändert. Obgleich diese Fälle bei dem in der Fig. 3 gezeigten Ausführungsbeispiel bei ein und demselben Rotor 3 vorgesehen sind, ist der jeweilige Rotor 3 jedoch bevorzugt stattdessen nur auf eine dieser Alternativen beschränkt.

Nachfolgend werden unter erneuter Bezugnahme auf Fig. 2 Details bezüglich des Stators 4 erläutert. So umfasst auch der Stator 4 ein Blechpaket 24, das aus mehreren aus Eisen bestehenden Blechen 25 gebildet ist, wobei entlang der Längsrichtung 10 fluchtende Ausstanzungen Statornuten 26 bilden. Die Statornuten 26 werden, bezogen auf die Radialrichtung 11, seitlich von Statorzähnen 27 begrenzt. Innerhalb der Statornuten 26 sind Statorwicklungen 28 vorgesehen, die aus aus Kupfer bestehenden Leiterdähten gebildet sind.

Nachfolgend wird ein erfindungsgemäßes Verfahren gemäß einem Ausführungsbeispiel anhand des in der Fig. 1 gezeigten Kraftfahrzeugs 1 sowie der in der Fig. 2 gezeigten elektrischen Maschine 2 erläutert, wobei die im Zusammenhang mit dem Verfahren erläuterten Punkte gleichermaßen auf das in der Fig. 3 gezeigte Ausführungsbeispiel anwendbar sind. Die zur Durchführung des Verfahrens erforderlichen Steuerbefehle werden seitens einer Steuerungseinrichtung 29 des Kraftfahrzeugs 1, die auch eine Komponente der elektrischen Maschine 2 sein kann, generiert. Die Steuerungseinrichtung 29 ist ferner dazu eingerichtet, die im Zuge der Durchführung des Verfahrens erforderlichen Auswertungsschritte durchzuführen.

So wird zunächst eine seitens des Stators 4 respektive der Statorwicklungen 28 vorliegende Wechselspannung generiert. Hierzu ist der elektrische Energiespeicher 7 und die Statorwicklungen 28 über eine Leistungselektronikeinrichtung 30 verbunden, die dazu eingerichtet ist, eine seitens des Energiespeichers 7 vorliegende Gleichspannung in eine seitens der elektrischen Maschine 2 erforderliche Wechselspannung umzuwandeln und umgekehrt. Hierzu ist die Leistungselektronikeinrichtung 30 mittels der von der Steuerungseinrichtung 29 generierten Steuerbefehle in entsprechende Schaltzustände bringbar. Zusammenfassend wird seitens der Energiespeichereinrichtung 7 eine elektrische Gleichspannung bereitgestellt, die mittels der Leistungselektronikeinrichtung 30 und in Abhängigkeit von mittels der Steuerungseinrichtung 29 erzeugten Steuerbefehlen in eine Wechselspannung umgewandelt wird, wobei diese Wechselspannung, die zumindest annähernd eine Sinusform aufweist, den Statorwicklungen 28 zugeführt wird.

Die Erzeugung der seitens des Stators 4 vorliegenden Wechselspannung erfolgt im Zuge der mittels der elektrischen Maschine 2 erfolgenden Generierung eines Traktionsmoments. So ist die Steuerungseinrichtung 29 dazu eingerichtet, anhand eines, etwa fahrerseitig oder seitens einer zumindest teilautonomen Fahrzeugsteuerung vorgegebenen, Vorgabesignals die Generierung der Steuersignale derart zu bewerkstelligen, dass die Leistungselektronikeinrichtung 30 in einen Schaltungszustand versetzt wird, bei dem den Statorwicklungen 28 die Wechselspannung derart zugeführt wird, dass ein entsprechend vorgegebenes Traktions- oder Bremsmoments mittels der elektrischen Maschine bewirkt wird. Die seitens des Stators 4 vorliegende Wechselspannung respektive der aufgrund dieser Wechselspannung in den Statorwicklungen 28 entstehende elektrische Strom bewirkt die Entstehung eines elektromagnetischen Wechselfeldes, das wiederum mit dem Rotor 3 respektive dem Kurzschlusskäfig elektromagnetisch zur Generierung des Antriebsmoments interagiert.

Die mittels der Steuerungseinrichtung 29 generierten Steuerbefehle bewirken ferner, dass der seitens des Stators 4 vorliegenden Wechselspannung beziehungsweise dem sinusförmigen Grundsignal dieser Wechselspannung zumindest temporär ein Aufprägesignal aufgeprägt wird. Eine Frequenz des Aufprägesignals ist höher als eine Frequenz der Wechselspannung. Das Aufprägesignal kann, gleichermaßen wie die seitens des Stators 4 vorliegende Wechselspannung eine Sinusform aufweisen. Die Amplitude des Aufprägesignals ist bevorzugt kleiner als die Amplitude der Wechselspannung, sodass das Aufprägesignal im Vergleich zu dem Grundsignal der Wechselspannung hinreichend schwach respektive gering ist, sodass eine hierdurch auftretende Beeinflussung des Traktionsmoments vernachlässigbar ist.

Das seitens des Stators 4 generierte Wechselfeld bewirkt aufgrund elektromagnetischer Induktion das Auftreten einer seitens des Rotors 3 respektive des Kurzschlusskäfigs vorliegenden Wechselspannung, die wiederum einen entsprechenden Wechselstrom und letztlich ein seitens des Rotors 3 vorliegendes elektromagnetisches Wechselfeld verursacht. Da aufgrund der oben beschriebenen Unterschiede der Formen der Querschnitte der Ausnehmungen 19 eine Anisotropie der magnetischen Eigenschaften bei dem Blechpaket 13 des Rotors 3 vorliegt, hängt die seitens des Rotors 3 induzierte Wechselspannung und mithin das entsprechend seitens des Rotors 3 generierte Wechselfeld von der aktuellen Drehstellung des Rotors 3 ab.

Das seitens des Rotors 3 vorliegende elektromagnetische Wechselfeld induziert wiederum eine seitens des Stators 4 vorliegende Rückkopplungsspannung. Diese hängt, da das seitens des Rotors 3 vorliegende elektromagnetische Wechselfeld von der aktuellen Drehstellung des Rotors 3 abhängt, gleichermaßen von dieser Drehstellung ab. Konkret hängt der aufgrund des Aufprägesignals vorliegende respektive der zu dem Aufprägesignal korrespondierende Anteil der Rückkopplungsspannung von der Drehstellung des Rotors 3 ab, sodass diese vermittels der Rückkopplungsspannung bestimmbar ist. So wird schließlich mittels einer seitens der Steuerungseinrichtung 29 implementierten Software eine Auswertung der Rückkopplungsspannung durchgeführt. Hierdurch wird mittels der Steuerungseinrichtung 29 und anhand der Rückkopplungsspannung eine die aktuelle Drehstellung des Rotors 3 respektive Läufers betreffende Information ermittelt, die wiederum im Rahmen der Steuerung des Betriebs der elektrischen Maschine 2 weiter verwendet wird.

## Patentansprüche

1. Rotor (3) für eine elektrische Maschine (2) eines Kraftfahrzeugs (1), der als ein bezüglich eines Stators (4) der elektrischen Maschine (2) rotierbar gelagerter Läufer der elektrischen Maschine (2) verwendbar ist, wobei der Rotor (3) mehrere entlang einer Umfangsrichtung (12) verteilt angeordnete und sich entlang einer Längsrichtung (10) erstreckende Ausnehmungen (19) aufweist, wobei sich die geometrischen Formen der Querschnitte der Ausnehmungen (19) untereinander entlang der Umfangsrichtung (12) unterscheiden,
**dadurch gekennzeichnet,**
**dass**, bezogen auf den montierten Zustand der elektrischen Maschine (2), die Ausnehmungen (19) bezüglich einer Radialrichtung (11) zu der Seite des Rotors (3) hin, die dem Stator (4) zugewandt ist, jeweils geschlossen sind.

2. Rotor (3) noch Anspruch 1,
**gekennzeichnet durch**
mehrere entlang der Umfangsrichtung (12) verteilt angeordnete und sich entlang der Radialrichtung (11) sowie entlang der Längsrichtung (10) erstreckende Rotorzähne (17), wobei zwischen zwei benachbarten Rotorzähnen (17) jeweils eine Nut (16) gebildet ist, in der jeweils ein Stab (18) eines Kurzschlusskäfigs aufgenommen ist.

3. Rotor (3) nach Anspruch 2,
**dadurch gekennzeichnet,**
**dass** sich die Ausnehmungen (19) jeweils durch einen der Rotorzähne (17), insbesondere durch einen Zahnkopfbereich des jeweiligen Rotorzahns (17), erstrecken.

4. Rotor (3) nach Anspruch 3,
**dadurch gekennzeichnet,**
**dass** sich durch jeden der Rotorzähne (17) genau eine der Ausnehmungen (19) erstreckt, oder dass die Anzahl der sich durch den jeweiligen Rotorzahn (17) erstreckenden Ausnehmungen (19) für die Rotorzähne (17) gleich ist.

5. Rotor (3) nach Anspruch 3 oder 4,
**dadurch gekennzeichnet,**
**dass** die wenigstens eine Ausnehmung (19), die sich durch einen der Rotorzähne (17) erstreckt, bezüglich einer sich entlang der Radialrichtung (11) erstreckenden Zentralachse des jeweiligen Rotorzahns (17) symmetrisch angeordnet und ausgebildet ist.

6. Rotor (3) nach einem der vorangehenden Ansprüche,
**gekennzeichnet durch**
ein mehrere gestapelt angeordnete Bleche (14) umfassendes Blechpaket (13), wobei entlang der Längsrichtung (10) fluchtende Aussparungen, insbesondere Ausstanzungen, der Bleche die Ausnehmungen (19) bilden.

7. Rotor (3) nach Anspruch 6,
**dadurch gekennzeichnet,**
**dass** wenigstens eine der Ausnehmungen (19) radial beabstandet zu einer sich entlang der Umfangsrichtung (12) erstreckenden Außenfläche des Blechpakets (13) angeordnet ist.

8. Rotor (3) nach Anspruch 6 oder 7,
**dadurch gekennzeichnet,**
**dass** wenigstens eine der Ausnehmungen (19) unmittelbar an der oder einer sich entlang der Umfangsrichtung (12) erstreckenden Außenfläche des Blechpakets (13) ausgebildet ist, wobei das Blechpaket (13), bezogen auf die Radialrichtung (11), innerhalb oder außerhalb einer Rotorhülse (21) angeordnet ist, die die Ausnehmungen (19) zu der Seite des Rotors (3) hin abschließt.

9. Rotor (3) nach einem der vorangehenden Ansprüche,
**dadurch gekennzeichnet,**
**dass** die Querschnitte der Ausnehmungen (19) runde, insbesondere kreisrunde und/oder elliptische, und/oder polygonale, insbesondere rechteckige, Formen aufweisen.

10. Elektrische Maschine (2), insbesondere ausgebildet als eine Asynchronmaschine, umfassend einen Stator (4) und einen bezüglich des Stators (4) rotierbar gelagerten Läufer,
**dadurch gekennzeichnet,**
**dass** der Läufer ein Rotor (3) nach einem der vorangehenden Ansprüche ist.

11. Elektrische Maschine (2) nach Anspruch 10,
**dadurch gekennzeichnet,**
**dass** der Stator (4) mehrere entlang der Umfangsrichtung (12) verteilt angeordnete und sich entlang der Radialrichtung (11) sowie entlang der Längsrichtung (10) erstreckende Statorzähne (27) aufweist, wobei zwischen zwei benachbarten Statorzähnen (27) jeweils eine Statornut (26) gebildet ist, in der Statorwicklungen (28) aufgenommen sind.

12. Kraftfahrzeug (1),
**gekennzeichnet durch**
einen als eine elektrische Maschine (2) nach Anspruch 10 oder 11 ausgebildeten Traktionsmotor, wobei die elektrische Maschine (2) mit einem Antriebsstrang (8) des Kraftfahrzeugs (1) verbunden ist, wobei mittels der elektrischen Maschine (2) ein Traktionsmoment generierbar und über den Antriebsstrang (8) auf Räder des Kraftfahrzeugs (1) übertragbar ist.

13. Verfahren zur Bestimmung einer Rotorlage eines Läufers einer elektrischen Maschine (2) nach Anspruch 10 oder 11, umfassen die folgenden Schritte:
- Erzeugen einer seitens des Stators (4) vorliegenden Wechselspannung,
- Generieren eines seitens des Stators (4) vorliegenden elektromagnetischen Wechselfeldes vermittels der seitens des Stators (4) vorliegenden Wechselspannung,
- Induzieren einer seitens des Rotors (3) vorliegenden Wechselspannung vermittels des seitens des Stators (4) vorliegenden Wechselfeldes,
- Generieren eines seitens des Rotors (3) vorliegenden elektromagnetischen Wechselfeldes vermittels der seitens des Rotors (3) vorliegenden Wechselspannung, wobei dieses Wechselfeld aufgrund der Unterschiede der geometrischen Formen der Querschnitte der Ausnehmungen (19) entlang der Umfangsrichtung (12) von der aktuellen Rotationsstellung des Rotors (3) abhängt,
- Induzieren einer seitens des Stators (4) vorliegenden Rückkopplungsspannung vermittels des seitens des Rotors (3) vorliegenden elektromagnetischen Wechselfeldes,
- Bestimmen der aktuellen Rotationsstellung des Rotors (3) anhand der Rückkopplungsspannung.

14. Verfahren nach Anspruch 13,
**dadurch gekennzeichnet,**
**dass** ein elektrischer Energiespeicher (7) des Kraftfahrzeugs (1) und Statorwicklungen (28) des Stators (4) über eine Leistungselektronikeinrichtung (30) miteinander verbunden sind, wobei mittels der Leistungselektronikeinrichtung (30) eine seitens des Energiespeichers (7) bereitgestellte Gleichspannung in die seitens des Stators (4) vorliegende Wechselspannung umgewandelt, die anschließend den Statorwicklungen (28) zugeführt wird, sodass das seitens des Stators (4) vorliegende elektromagnetische Wechselfeld vermittels der seitens des Stators (4) vorliegenden Wechselspannung generiert wird.

15. Verfahren nach Anspruch 13 oder 14,
**dadurch gekennzeichnet,**
**dass** auf die seitens des Stators (4) vorliegende Wechselspannung zumindest temporär ein bezüglich dieser Wechselspannung höherfrequentes Aufprägesignal aufgeprägt wird, wobei die aktuelle Rotationsstellung des Rotors (3) anhand des aufgrund des Aufprägesignals resultierenden Anteils der Rückkopplungsspannung bestimmt wird.
